# EUROPÄISCHE PATENTSCHRIFT

(11) **EP 2 663 673 B1**
(45) Veröffentlichungstag und Bekanntmachung des Hinweises auf die Patenterteilung: **24.09.2014**
(21) Anmeldenummer: 11788443.7
(22) Anmeldetag: 25.11.2011
(51) Int. Cl.: D01D 4/06, D01D 5/098, B29C 47/70

(54) **SPINNDÜSENPAKET**
SPINNERET BUNDLE
ENSEMBLE DE FILIÈRES

(30) Priorität: 12.01.2011 DE 102011008356
(43) Veröffentlichungstag der Anmeldung: 20.11.2013
(73) Patentinhaber: Oerlikon Textile GmbH & Co. KG, 42897 Remscheid (DE)
(72) Erfinder: SCHÜTT, Günter, 24539 Neumünster (DE); BIRKHOLZ, Volker, 24539 Neumünster (DE); EFFTINGE-REICHAU, Nicola, 24118 Kiel (DE); KOHL, Sebastian, 24537 Neumünster (DE)
(74) Vertreter: Neumann, Ditmar
(86) Internationale Anmeldenummer: PCT/EP2011/071012
(87) Internationale Veröffentlichungsnummer: WO 2012/095211

(56) Entgegenhaltungen:
- WO-A1-01/88234
- WO-A1-2005/061773
- WO-A2-2007/131714
- DE-A1-102007 032 107

## Beschreibung

Die Erfindung betrifft ein Spinndüsenpaket zum Erzeugen von Fasern aus seiner Polymerschmelze gemäß dem Oberbegriff des Anspruchs 1.

Ein gattungsgemäßes Spinndüsenpaket geht aus der DE 10 2006 017 212 A1 hervor.

Das bekannte Spinndüsenpaket wird zur Herstellung von Faservliesen verwendet, wobei die durch eine reihenförmige Anordnung einer Vielzahl von Düsenbohrungen extrudierten Fasern mittels eines Luftstromes abgezogen werden. Insoweit ist das Düsenpaket insbesondere zum Schmelzblasen einer Vielzahl von Fasern geeignet. Die Zuführung einer Polymerschmelze erfolgt über einen Schmelzeeinlass der an einer oberen Verteilplatte des Düsenpaketes ausgebildet ist. Der Schmelzeeinlass mündet in einer Verteilerkammer, die in einen Zuführkanal einer Düsenplatte mündet. Die Verteilerkammer innerhalb der Verteilerplatte und der Zuführkanal innerhalb der Düsenplatte erstrecken sich entlang der Reihe der Düsenbohrungen, die mit dem Zuführkanal verbunden sind. Zwischen der Verteilerkammer und dem Zuführkanal ist ein Filterelement und eine Lochplatte angeordnet. Um möglichst geringe Verweilzeiten der Polymerschmelze innerhalb des Düsenpaketes zu erhalten, ist zusätzlich ein Verdrängungskörper im Zuführkanal angeordnet, so dass relativ kleine Strömungsquerschnitte und damit höhere Durchflussgeschwindigkeiten erzeugt werden.

Derartige Verdrängerkörper besitzen jedoch grundsätzlich den Nachteil, dass je nach Formgebung mehr oder weniger stark ausgeprägte Totzonen bilden, in welchen kein kontinuierlicher Schmelzefluss eintritt. Insoweit lassen sich unterschiedliche Verweilzeiten damit nicht hinreichend beseitigen. Ein weiterer Nachteil ist dadurch gegeben, dass durch den Verdrängerkörper insbesondere bei Polymerschmelzen eine höhere Scherenergie aufgrund verringerter Durchflussquerschnitte erzeugt wird, die eine Temperaturerhöhung und damit eine Veränderung der Viskositäten der Schmelze zur Folge haben. Derartige Erscheinungen können örtlich begrenzt sein, so dass über die Länge des Düsenpaketes Ungleichmäßigkeiten beim Extrudieren der Schmelze durch die Düsenbohrungen auftreten können.

Um über eine große Länge des Düsenpaketes eine gleichmäßige Verteilung der Polymerschmelze zu erhalten, ist aus der WO 2007/131714 ein Spinndüsenpaket bekannt, bei welcher innerhalb der Verteilerplatte mehrere nebeneinander ausgebildete Verteilerkammern angeordnet sind, die durch eine Lochplatte mit mehreren Lochgruppen mit dem Zuführkanal in der Düsenplatte verbunden sind. Jeder der Verteilerkammern ist dabei an der Lochplatte einer der Lochgruppen zugeordnet, wobei die Verteilerkammern über separate Schmelzeeinlässe mit einer Polymerschmelze versorgt werden.

Das bekannte Düsenpaket ist somit insbesondere zur Erzeugung von Faservliesen mit großen Produktionsbreiten von >5m geeignet. Aufgrund der Mehrzahl von Schmelzeeinlässen und die dafür erforderliche Mehrzahl von Spinnpumpen ist ein derartiges Düsenpaket für kleinere Produktionsbreiten zu kostenintensiv.

Es ist Aufgabe der Erfindung, ein Spinndüsepaket zum Erzeugen von Fasern aus einer Polymerschmelze der gattungsgemäßen Art bereitzustellen, bei welchem mit einfachen Mitteln eine vergleichmäßigte Schmelzeführung und -verteilung möglich ist.

Ein weiteres Ziel der Erfindung liegt darin, mit den in einer Reihe angeordneten Düsenbohrungen gleichmäßige Fasern und Faserablagen innerhalb einer Produktionsbreite zu erzeugen.

Diese Aufgabe wird erfindungsgemäß durch ein Spinndüsenpaket mit den Merkmalen nach Anspruch 1 gelöst.

Vorteilhafte Weiterbildungen der Erfindung sind durch die Merkmale und Merkmalskombinationen der Unteransprüche definiert.

Die Erfindung liegt die Erkenntnis zugrunde, dass bei einer herkömmlichen Verteilung mit kleiderbügelförmig ausgebildeten Verteilerkammern die Polymerschmelze im mittleren Bereich des Düsenpaketes gegenüber den an den Randbereich geführten Polymerschmelzen vliestechnische Unterschiede aufweisen, die im wesentlichen aus temperaturbedingten Viskositätsunterschieden resultieren. So wurde beobachtet, dass bei herkömmlichen Düsenpaketen die erzeugten Faserschichten tendenziell im mittleren Bereich ein höheres Flächengewicht aufzeigen. Dieser Effekt konnte insbesondere bei der Verarbeitung von dem Polymer PBT festgestellt werden.

Um die in der Verteilerkammer auftretenden Effekte zu kompensieren, wird die zwischen der Verteilerkammer und dem Zuführkanal der Düsenplatte angeordnete Lochplatte genutzt, um eine Vergleichmäßigung der Schmelze innerhalb des Zuführkanals zu erhalten. Hierzu sind die Durchgangsbohrungen in der Lochplatte erfindungsgemäß in mehreren Bohrungsgruppen aufgeteilt, wobei die Durchgangsbohrungen von zumindest zwei der Bohrungsgruppen innerhalb der Lochplatte gegenüber Mittelsenkrechten derart unterschiedliche Neigungswinkel aufweisen, dass sich die Durchgangsbohrung zumindest teilweise innerhalb der Lochplatte im Abstand zueinander kreuzen. Somit wird die aus der Verteilerkammer in den Zuführkanal geleitete Schmelze örtlich über die Durchgangsbohrungen innerhalb des Düsenpaketes verteilt. Diese Verteilung führte zu einer Vergleichmäßigung der Schmelze innerhalb des Zuführkanals, so dass jede der dem Zuführkanal verbundene Düsenbohrung im wesentlichen einen gleichen Schmelzedurchsatz lieferten.

Bei kanalförmig ausgebildeten Verteilerkammern und Zuführkanälen hat sich die Weiterbildung der Erfindung besonders bewährt, bei welcher die geneigten Durchgangsbohrungen innerhalb der Lochplatte durch zwei benachbarte Bohrungsreihen gebildet sind, die parallel zu der Reihe der Düsenbohrungen verlaufen. Damit lassen sich sowohl örtliche Verteilungen in Längsrichtung des Zuführkanals oder aber auch quer zum Zuführkanal ausbilden.

Besonders vorteilhaft ist hierbei die Ausbildung des Spinndüsenpaketes in der Weiterbildung, bei welcher die geneigten Durchgangsbohrungen innerhalb der Lochplatte in zwei benachbarten Verteilerebenen angeordnet sind, die sich parallel zu den Reihen der Düsenbohrungen erstrecken. Damit besteht die Möglichkeit, eine in Längsrichtung des Zuführkanals gerichtete Umverteilung der Schmelze beim Übergang von der Verteilerkammer in den Zuführkanal zu erhalten. Je nach Neigung der Durchgangsbohrungen der Bohrungsgruppen lässt sich hierbei die Schmelze von einem Ende des Düsenpaketes zu einer Mitte des Düsenpaketes oder aus einer Mitte des Düsenpaketes zu einem Ende des Düsenpaketes führen.

Bei einer kleiderbügelförmig ausgebildeten Verteilerkammer ist die Weiterbildung der Erfindung besonders bevorzugt anwendbar, bei welcher die Lochplatte zwei Bohrungsreihen mit mehreren Bohrungsgruppen aufweist, wobei die Durchgangsbohrungen der Bohrungsgruppen innerhalb einer der Bohrungsreihe spiegelsymmetrisch zu einer Plattenmitte der Lochplatte ausgebildet sind. Somit lässt sich die in der Verteilerkammer im mittleren Bereich des Düssenpaketes geführte Schmelze durch die Durchgangsbohrung jeweils aus der Mitte des Düsenpaketes herausführen.

Die Vergleichmäßigung und Verteilung der Schmelze lässt sich auch durch die Anordnung der Durchgangsbohrungen beeinflussen. So wird vorgeschlagen, die Durchgangsbohrungen einer der Bohrungsgruppen innerhalb der Lochplatte jeweils mit gleich großen Neigungswinkeln auszubilden.

Es ist jedoch auch möglich, die Durchgangsbohrungen einer der Bohrungsgruppen innerhalb der Lochplatte jeweils mit ungleich großen Neigungswinkeln auszubilden.

Als Neigungswinkel der Durchgangsbohrung hat sich insbesondere ein Winkelbereich von 0° bis 60° und / oder 0° bis -60° als vorteilhaft herausgestellt.

Die erfindungsgemäße Umverteilung der Schmelze durch die Durchgangsbohrungen der Lochplatte lässt sich vorteilhaft auch bei Verteilplatten mit mehreren nebeneinander ausgebildeten Verteilerkammern nutzen. Hierbei können den Verteilerkammern eine oder auch mehrere Lochplatten mit mehreren Bohrgruppen zugeordnet sein. Wesentlich hierbei ist, dass jeder Verteilerkammer innerhalb der Lochplatte zumindest zwei Bohrungsgruppen zugeordnet ist.

Für die konstruktive Umsetzung ist insbesondere die Weiterbildung des Spinndüsenpaketes von Vorteil, bei welcher die Lochplatte in einer symmetrisch zum Zuführkanal ausgebildeten Ausnehmung an der Oberseite der Düsenplatte gehalten ist.

Um die aus den Düsenbohrungen erzeugten Fasern mittels eines Luftstromes abziehen zu können, ist desweiteren vorgesehen, dass an der Unterseite der Düsenplatte eine Auslassplatte angeordnet ist und dass zwischen der Düsenplatte und der Auslassplatte zwei gegenüber liegende Luftdüsenkanäle gebildet sind, die mit ihren Austrittsöffnungen den Düsenbohrungen zugeordnet sind. Die Luftzuführung kann hierbei über separate Luftkanäle in dem Düsenpaket realisiert werden.

Die Erfindung wird nachfolgend anhand einiger Ausführungsbeispiele des erfindungsgemäßen Spinndüsenpaketes unter Bezug auf die beigefügten Figuren näher erläutert.

Es stellen dar:
- Fig. 1: schematisch eine Querschnittansicht eines ersten Ausführungsbeispiels des erfindungsgemäßen Spinndüsenpaketes
- Fig. 2: schematisch eine Längsschnittansicht des Ausführungsbeispiels aus Fig. 1
- Fig. 3: schematisch ein Ausschnitt einer Längsschnittansicht der Lochplatte aus dem Ausführungsbeispiel nach Fig. 2
- Fig. 4: schematisch ein Ausschnitt einer Draufsicht der Lochplatte aus Fig. 3
- Fig. 5: schematisch ein Ausschnitt einer Draufsicht einer alternativen Ausführung der Lochplatte aus Fig. 2
- Fig. 6: schematisch eine Querschnittansicht der Lochplatte aus Fig. 5
- Fig. 7: schematisch eine Draufsicht eines weiteren Ausführungsbeispiels einer Lochplatte des Spinndüsenpaketes gemäß Fig. 2
- Fig. 8: schematisch eine Längsschnittansicht der Lochplatte aus Fig. 7
- Fig. 9: schematisch eine Längsschnittansicht der Lochplatte aus Fig. 7
- Fig. 10: schematisch eine Längsschnittansicht eines weiteren Ausführungsbeispiels des erfindungsgemäßen Spinndüsenpaketes
- Fig. 11 und 12: schematisch weitere Ausführungsbeispiele des erfindungsgemäßen Spinndüsenpaketes

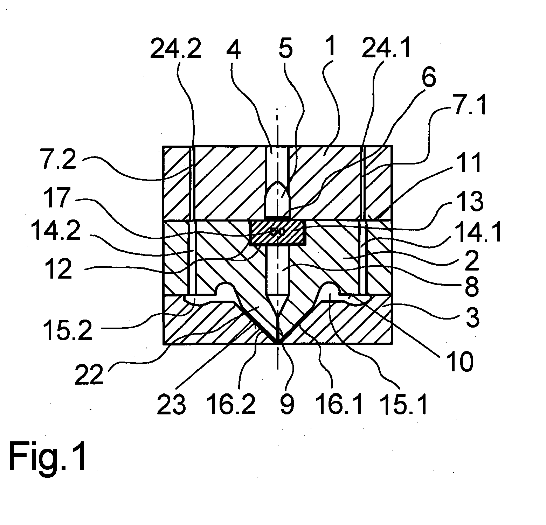

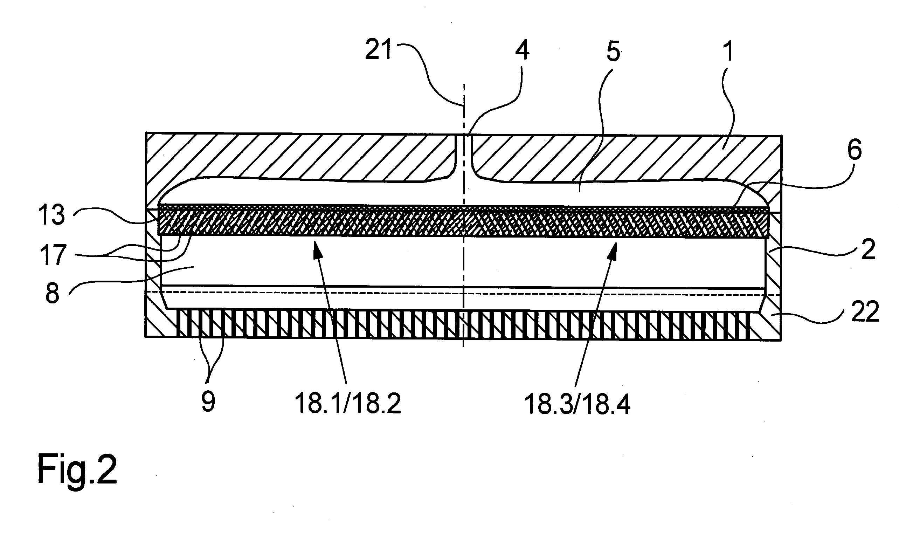

In den Fig. 1 und 2 ist ein erstes Ausführungsbeispiel des erfindungsgemäßen Spinndüsenpaketes schematisch in mehreren Ansichten dargestellt. Fig. 1 zeigt das Ausführungsbeispiel schematisch in einer Querschnittansicht und in Fig. 2 ist das Spinndüsenpaket in einer Längsschnittansicht gezeigt. Insoweit kein ausdrücklicher Bezug zu einer der Figuren gemacht ist, gilt die nachfolgende Beschreibung für beide Figuren.

Das Ausführungsbeispiel des erfindungsgemäßen Spinndüsenpaketes besteht aus einer Düsenplatte 2, die an einer Oberseite 11 eine Verteilerplatte 1 trägt und die an einer Unterseite 10 mit einer Auslassplatte 3 verbunden ist. Die Verteilerplatte 1 sowie die Auslassplatte 3 sind mit der Düsenplatte 2 druckdicht miteinander verbunden, beispielsweise durch eine Vielzahl von Schraubmitteln, die nicht näher dargestellt sind.

Die Platten 1, 2 und 3 sind üblicherweise in einem beheizten Spinnbalken angeordnet, welcher korrespondierende Anschlüsse zur Aufnahme der Verteilerplatte 1 aufweisen.

Die Verteilerplatte 1 enthält einen Schmelzeeinlass 4 an der zur Düsenplatte 2 gegenüberliegenden Seite. Der Schmelzeeinlass 4 mündet innerhalb der Verteilerplatte 1 in eine Verteilerkammer 5.

Wie aus der Darstellung in Fig. 2 hervorgeht, ist die Verteilerkammer 5 in der Verteilerplatte 1 kleiderbügelförmig ausgebildet und erstreckt sich in Längsrichtung des quaderförmigen Spinndüsenpaketes. Die Verteilerkammer 5 ist auf der der Düsenplatte 2 zugewandten Seite der Verteilerplatte 1 offen und wird durch ein Filterelement 6 begrenzt.

Wie aus den Fig. 1 und 2 hervorgeht, liegt das Filterelement 6 auf einer Lochplatte 13, die in einer Ausnehmung 12 an der Oberseite 11 der Düsenplatte 2 eingelassen ist. Die Ausnehmung 12 ist symmetrisch zu einem Zuführkanal 8 ausgebildet, der mit einem Ende in die Ausnehmung 12 mündet und am gegenüberliegenden Ende eine Verjüngung aufweist, in welcher eine Vielzahl von Düsenbohrungen 9 einmünden. Die Düsenbohrungen 9 sind in einer Reihe ausgebildet und erstrecken sich in Längsrichtung der Düsenplatte 2. Die Düsenbohrungen 9 und das Ende des Zuführkanals 8 sind an einem hervorragenden Mittleren Steg 22 der Düsenplatte 2 ausgebildet. Wie aus der Darstellung in Fig. 1 hervorgeht, bildet der Steg 22 mit einer in der Auslassplatte 3 eingebrachten Vertiefung 23 zwei sich gegenüberliegende Luftdüsenkanäle 16.1 und 16.2, die mit ihren Austrittsöffnungen dem Auslass der Düsenbohrungen α zugeordnet sind. Die Luftdüsenkanäle 16.1 und 16.2 münden jeweils in eine Luftkammer 15.1 und 15.2, die zwischen der Düsenplatte 2 und der Auslassplatte 3 ausgebildet sind. Über mehrere Luftkanäle 14.1 und 14.2 in der Düsenplatte 2 sind die Luftkammern 15.1 und 15.2 mit mehreren Luftkanälen 7.1 und 7.2 in der Verteilplatte 1 verbunden. Die Luftkanäle 7.1 und 7.2 in der Verteilplatte 1 bilden jeweils einen Drucklufteinlass 24.1 und 24.2 an der Verteilplatte 1.

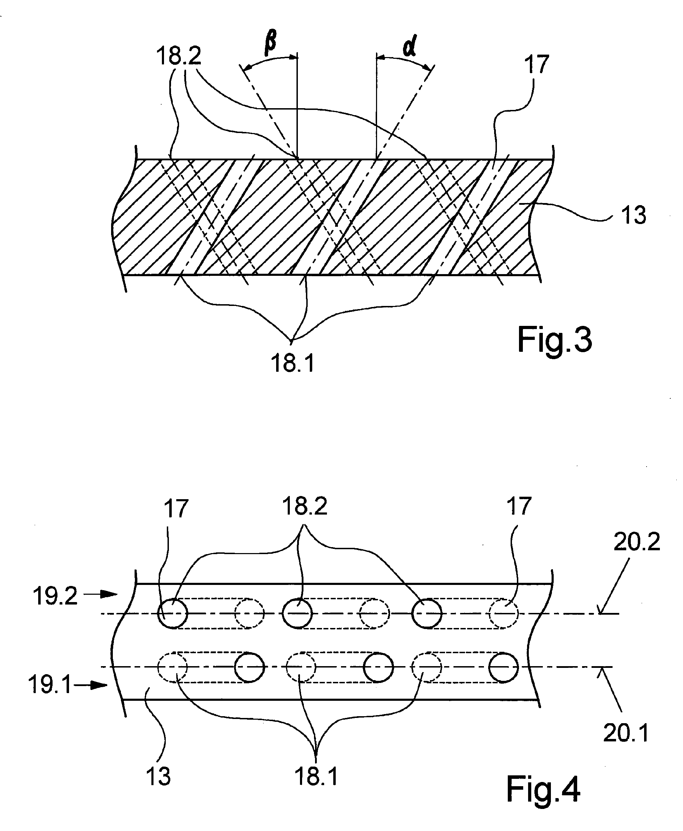

Wie in den Darstellungen in Fig. 1 und 2 hervorgeht, ist die Verteilerkammer 5 der Verteilerplatte 1 über das Filterelement 6 und eine Lochplatte 13 mit dem Zuführkanal 8 in der Düsenplatte 2 verbunden. Hierzu weist die Lochplatte 13 eine Vielzahl von Durchgangsbohrungen 17 auf. Zur Ausbildung und Anordnung der Durchgangsbohrungen 17 in der Lochplatte 13 wird zusätzlich zu den Fig. 3 und 4 Bezug genommen. In Fig. 3 ist eine Teilansicht eines Längsschnittes der Lochplatte 13 und in Fig. 4 eine Teilansicht der Draufsicht der Lochplatte 13 gezeigt. Die Lochplatte 13 weist mehrere Bohrungsgruppen mit jeweils mehreren Durchgangsbohrungen 17 auf. In Fig. 3 und Fig. 4 sind zwei Bohrungsgruppen 18.1 und 18.2 gezeigt. Die Durchgangsbohrungen 17 der Bohrungsgruppe 18.1 ist in einer ersten Bohrungsreihe 19.1 und die Durchgangsbohrungen 17 der Bohrungsgruppe 18.2 sind in einer zweiten Bohrungsreihe 19.2 angeordnet. Die Längsschnittansicht der Lochplatte 13 nach Fig. 3 zeigt die Durchgangsbohrungen 17 der ersten Bohrungsgruppe 18.1. Die Durchgangsbohrungen 17 der zweiten Bohrungsgruppe 18.2 sind in Fig. 3 gestrichelt dargestellt.

Wie aus der Darstellung in Fig. 3 hervorgeht, weisen die Durchgangsbohrungen 17 der Bohrungsgruppe 18.1 innerhalb der Lochplatte 13 gegenüber einer Mittelsenkrechten einen Neigungswinkel auf. Der Neigungswinkel ist mit dem Bezugszeichen α gekennzeichnet. Die in Abstand angeordneten Durchgangsbohrungen 17 der zweiten Bohrungsgruppe 18.2 weisen ebenfalls gegenüber einer Mittelsenkrechten innerhalb der Lochplatte einen Neigungswinkel auf. Der Neigungswinkel ist mit dem Bezugszeichen β gekennzeichnet. Die Neigungswinkel α und β weisen in Bezug zu der Mittelsenkrechten unterschiedliche Richtungen auf, so dass die Durchgangsbohrungen 17 der beiden Bohrungsgruppen 18.1 und 18.2 sich innerhalb der Lochplatte im Abstand zueinander kreuzen. Die Beträge der Neigungswinkel α und β sind in diesem Ausführungsbeispiel gleich, so dass gilt β = -α. Grundsätzlich können die Neigungswinkel α und β vom Betrag unterschiedlich Werte aufweisen.

Innerhalb der Bohrungsgruppe 18.1 weisen in diesem Ausführungsbeispiel alle Durchgangsbohrungen 17 den gleichgroßen Neigungswinkel α auf. Ebenso besitzen die Durchgangsbohrungen 17 der zweiten Bohrungsgruppe 18.2 einen identischen Neigungswinkel β.

Wie insbesondere aus der Darstellung in Fig. 4 hervorgeht, liegen die geneigten Durchgangsbohrungen 17 der Bohrungsgruppe 18.1 in einer ersten Verteilerebene 20.1 und die geneigten Durchgangsbohrungen 17 der zweiten Bohrungsgruppe 18.2 in einer zweiten Verteilerebene 20.2. Beim Durchtritt der Schmelze erfolgt somit durch die Durchgangsbohrungen 17 in der Verteilebene 20.1 eine Schmelzeverteilung nach links, wie in Fig. 4 durch einen Pfeil gekennzeichnet ist. Dagegen werden durch die geneigten Durchgangsbohrungen 17 in der Verteilebene 20.2 eine Verschmelzeverteilung nach rechts bewirkt. Damit lässt sich die Schmelze bei Durchtritt durch die Lochplatte 13 derart umverteilen, dass eine im mittleren Bereich der Verteilerkammer 5 eintretende Schmelze tendenziell nach außen in den Zuführkanal 8 und umgekehrt eine an den Enden der Verteilerkammer 5 geführte Schmelze tendenziell nach innen zur Mitte des Zuführkanals 8 geführt wird.

Wie aus der Darstellung in Fig. 2 zu entnehmen ist, weist die Lochplatte 13 insgesamt vier Bohrungsgruppen 18.1, 18.2, 18.3 und 18.4 auf. Wobei in dem Längsschnitt nur die Durchgangsbohrungen 18.1 und 18.3 dargestellt sind. Die Durchgangsbohrungen 17 der Bohrungsgruppe 18.1 und 18.3 sind spiegelsymmetrisch zu einer Plattenmittel 21 ausgebildet. Insoweit weisen die Durchgangsbohrungen 17 der Bohrungsgruppe 18.3 einen Neigungswinkel β auf, wie zuvor in der Bohrungsgruppe 18.2 beschrieben wurde. Durch die spiegelsymmetrische Ausbildung der insgesamt vier Bohrungsgruppen innerhalb der Lochplatte 13 sind die Bohrungsgruppen 18.1 und 18.4 sowie die Bohrungsgruppen 18.2 und 18.3 identisch ausgebildet.

Durch die Anordnung und Ausbildung der Durchgangsbohrungen 17 in der Lochplatte 13 wird eine Verteilung der Schmelze beim Übergang von der Verteilerkammer 5 zum Zuführkanal 8 erzeugt. So lässt sich insbesondere die im mittleren Bereich der Verteilerkammer 5 geführt Schmelze durch die geneigten Durchgangsbohrungen 17 in Längsrichtung verteilen. Dadurch werden innerhalb des Zuführkanals 8 Querströmungen erzeugt, die zu einer vergleichmäßigten Verteilung der Schmelze führt.

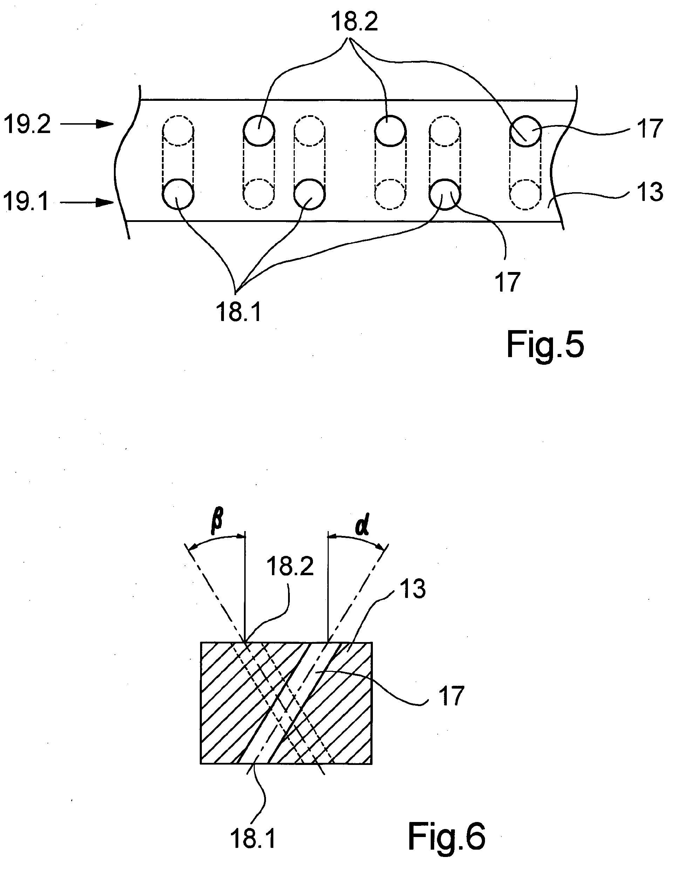

Je nach Ausbildung und Neigung der Durchgangsbohrung 17 in der Lochplatte 13 sind jedoch auch andere Verteilungen der Schmelz innerhalb des Zuführkanals 8 der Düsenplatte 2 möglich. So ist in Fig. 5 und Fig. 6 ein Ausführungsbeispiel einer Lochplatte 13 gezeigt, wie sie beispielsweise in dem Spinndüsenpaket gemäß dem Ausführungsbeispiel nach Fig. 1 und 2 einsetzbar wäre. Bei dem in Fig. 5 und Fig. 6 dargestellten Ausführungsbeispiel der Lochplatte 13 sind die Durchgangsbohrungen 17 durch zwei Bohrungsgruppen 18.1 und 18.2 aufgeteilt. Die Bohrungsgruppe 18.1 bildet eine erste Bohrungsreihe 19.1 und die Bohrungsgruppe 18.2 eine zweite Bohrungsgruppe 19.2. Die Durchgangsbohrungen 17 der beiden Bohrungsgruppen 18.1 und 18.2 besitzen bei diesem Ausführungsbeispiel kein in Längsrichtung ausgerichtete Neigung, sondern ein in Querrichtung zur Lochplatte 13 ausgerichtete Neigung. So geht aus der Querschnittansicht in Fig. 6 hervor, dass die Durchgangsbohrungen 17 der Bohrungsgruppe 18.1 mit einem Neigungswinkel α die Lochplatte 13 durchdringen und die Durchgangsbohrungen 17 der Bohrungsgruppe 18.2 einen Neigungswinkel β aufweisen. Auch hierbei können die Neigungswinkel vom Betrag her gleichgroß sein, jedoch im Bezug zu einer Mittelsenkrechten in unterschiedlicher Richtung. So gilt ebenfalls α = -β.

Bei Verwendung der in Fig. 5 und 6 dargestellten Lochplatte in dem Ausführungsbeispiel nach Fig. 1 und 2 würde demnach die Schmelze bei Austritt von der Verteilerkammer 5 zwischen den Längsseiten des Zuführkanals 8 umverteilt.

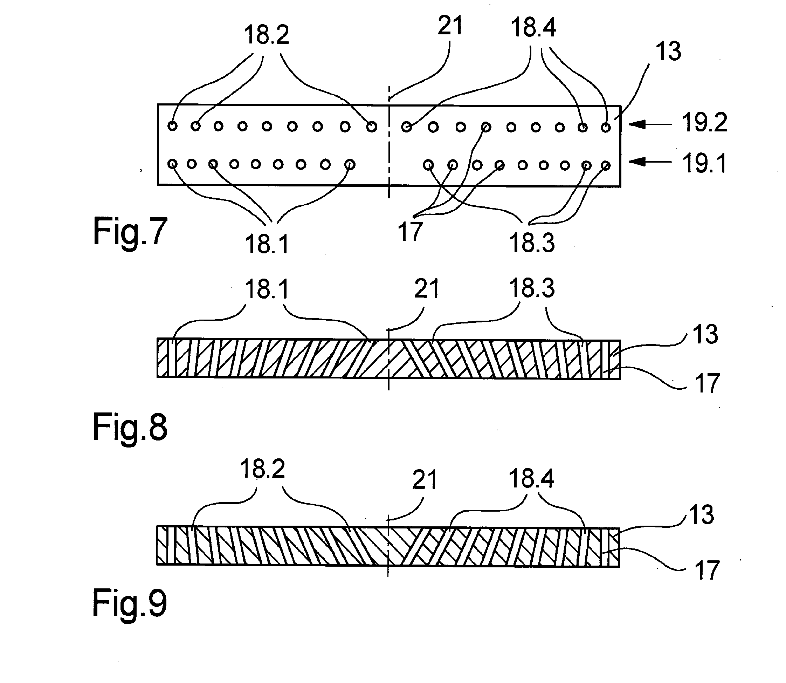

In den Fig. 7, 8 und 9 ist ein weiteres Ausführungsbeispiel einer Lochplatte gezeigt, wie sie in dem Ausführungsbeispiel des Spinndüsenpaketes nach Fig. 1 und 2 einsetzbar wäre. Die Lochplatte 13 ist in den Fig. 7, 8 und 9 in verschiedenen Ansichten dargestellt. Fig. 7 zeigt eine Draufsicht der Lochplatte, Fig. 8 eine Längsschnittansicht der Bohrungsreihe 19.1 und Fig. 9 eine Längsschnittansicht der Bohrungsreihe 19.2. In den Fig. 7, 8 und 9 ist jeweils eine Teilansicht der Lochplatte 13 im Bereich der Plattenmitte 21 dargestellt.

Wie aus der Fig. 7 zu erkennen ist, weist die Lochplatte 13 eine Vielzahl von Durchgangsbohrungen 17 auf, die in insgesamt vier Bohrungsgruppen 18.1 bis 18.4 unterteilt sind. Die Bohrungsgruppen 18.1 und 18.3 sowie die Bohrungsgruppen 18.2 und 18.4 bilden jeweils eine Bohrungsreihe 19.1 und 19.2. Die Bohrungsgruppen 18.1 und 18.2 sind spiegelsymmetrisch zu den Bohrungsgruppen 18.3 und 18.4 ausgeführt.

In Fig. 8 ist eine Längsschnittansicht in der Bohrungsgruppe 18.1 und 18.3 gezeigt. Die Durchgangsbohrungen 17 der Bohrungsgruppen 18.1 und 18.3 weisen innerhalb der Bohrungsgruppe jeweils einen unterschiedlichen Neigungswinkel auf, der ausgehend von der Plattenmitte 21 sich zu den Plattenenden hin kontinuierlich verkleinert. Zu den Plattenenden hin weisen die Durchgangsbohrungen 17 keinen Neigungswinkel auf und durchdringen die Lochplatte 1 im wesentlichen vertikal. Die Durchgangsbohrungen 17 der Bohrungsgruppen 18.1 und 18.3 sind somit besonders geeignet, um ein im Bereich der Plattenmitte eintretende Polymerschmelze auf der Auslassseite der Durchgangsbohrungen von der Plattenmitte 21 wegzuführen.

Um in gleichem Maße außermittig geführte Schmelze zu Mitte zu führen ist in Fig. 9 eine Längsschnittansicht der Durchgangsbohrungen 17 der Bohrungsgruppen 18.2 und 18.4 gezeigt. Die Bohrungsgruppen 18.2 und 18.4 sind ebenfalls spiegelsymmetrisch zur Plattenmitte 21 ausgebildet, wobei die Durchgangsbohrungen 17 im Vergleich zu den Bohrungsgruppen 18.1 und 18.3 einen negativen Neigungswinkel aufweisen, so dass bei Eintritt der Schmelze auf der Einlassseite der Lochplatte 13 diese auf der Auslassseite zur Plattenmitte 21 geführt wird. Somit entsteht eine Umverteilung und eine Vergleichmäßigung der Schmelze auf der Auslassseite der Lochplatte 13.

Bei den in den Fig. 1 bis 9 dargestellten Ausführungsbeispielen der Lochplatten 13 mit Druchgangsbohrungen 17 hat sich gezeigt, dass bereits eine hinreichende Umverteilung und Vergleichmäßigung der Schmelze bei Neigungswinkeln im Bereich von max. 60° erreicht werden konnten. Hierbei lässt sich wie in dem Ausführungsbeispiel nach Fig. 7 bis 9 dargestellt ist, der Neigungswinkel in einen Winkelbereich von 0° bis 60° ausführen.

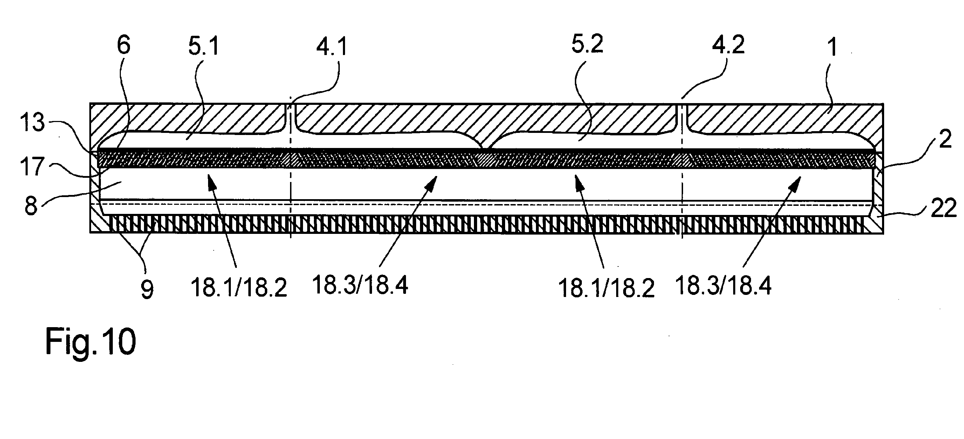

Um Fasern für große Produktionsbreiten zu erzeugen ist in Fig. 10 ein weiteres Ausführungsbeispiel des erfindungsgemäßen Spinndüsenpaketes gezeigt. Das Spinndüsenpaket ist in Fig. 10 in einer Längsschnittansicht dargestellt, da der Aufbau im Wesentlichen identisch zu dem vorgenannten Ausführungsbeispiel nach Fig. 1 und 2 ausgebildet ist, so dass nur die Unterschiede erläutert werden.

Bei dem in Fig. 10 dargestellten Ausführungsbeispiel ist die Düsenplatte 2 sowie die hier nicht dargestellte Auslassplatte identisch zu dem vorgenannten Ausführungsbeispiel ausgebildet. Die an der Oberseite der Düsenplatte 2 angeordnete Verteilerplatte 1 weist über die Länge des Düsenpaketes zwei nebeneinander ausgebildete Verteilerkammern 5.1 und 5.2 mit jeweils zwei einmündenden Schmelzeeinlässen 4.1 und 4.2 auf. Die Verteilerkammern 5.1 und 5.2, die zur Unterseite der Verteilerplatte 1 sich in Längsrichtung und einen Schmelzeauslass bilden, münden in einem Zuführkanal 8 in der Düsenplatte 2. Zwischen den Verteilerkammern 5.1 und 5.2 und dem Zuführkanal 8 ist ein Filterelement 6 sowie eine Lochplatte 13 angeordnet. Die Lochplatte 13 weist pro Verteilerkammer 5.1 und 5.2 jeweils vier Bohrungsgruppen von Durchgangsbohrungen 17 auf. Die den Verteilerkammern 5.1 und 5.2 zugeordneten Bohrungsgruppen der Durchgangsbohrungen 17 sind entsprechend dem Ausführungsbeispiel der Lochplatte nach Fig. 7 ausgebildet. Hierbei ist die Symmetrieachse nicht durch eine Plattenmitte sondern jeweils durch die Schmelzeeinlässe 4.1 und 4.2 definiert, so dass zu jeder Verteilerkammer eine Schmelzeverteilung erfolgt, wie sie in der Beschreibung nach Fig. 7 bis 9 aufgeführt ist.

Bei dem in Fig. 10 dargestellten Ausführungsbeispiel besteht auch die Möglichkeit, jedem der Verteilerkammern 5.1 und 5.2 eine separate Lochplatte zuzuordnen, so dass die in dem vorgenannten Ausführungsbeispielen nach Fig. 1 bis 6 jeweils pro Verteilerkammer einsetzbar wären.

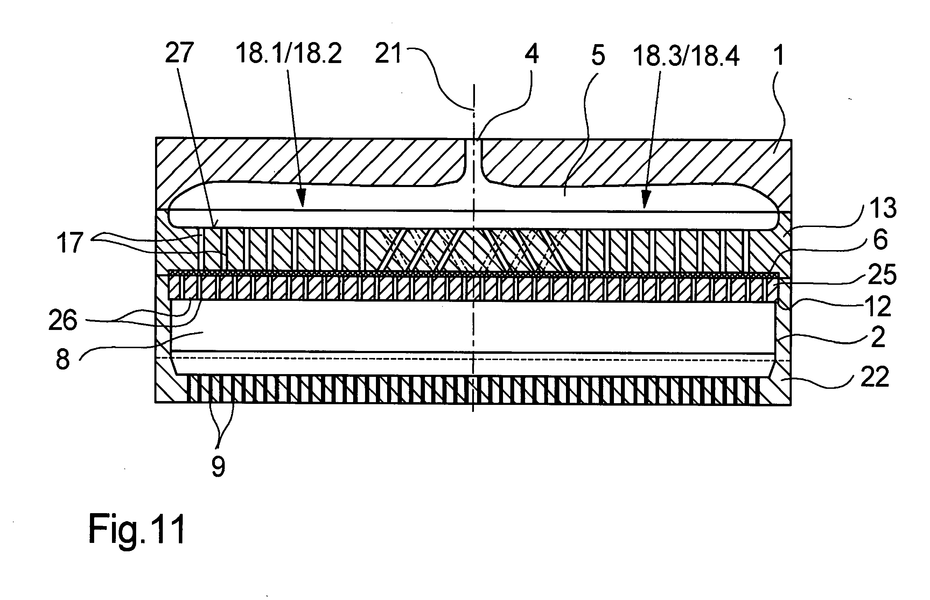

In Fig. 11 ist ein weiteres Ausführungsbeispiel des erfindungsgemäßen Spinndüsenpaketes zur Erzeugung von Fasern aus einer Polymerschmelze schematisch in einer Längsschnittansicht dargestellt. Das in Fig. 11 dargestellte Ausführungsbeispiel ist im Wesentlichen identisch zu dem Ausführungsbeispiel nach Fig. 2 so dass an dieser Stelle nur die Unterschiede erläutert werden und ansonsten Bezug zu der vorgenannten Beschreibung genommen wird.

Bei dem in Fig. 11 gezeigten Ausführungsbeispiel des Spinndüsenpaketes ist die Lochplatte 13 sandwichartig zwischen der Verteilerplatte 1 und der Düsenplatte 2 angeordnet. Insoweit schließen die Verteilerplatte 1 und die Lochplatte 6 eine in der Verteilplatte 1 ausgebildete Verteilkammer 5 ein. Die Verteilkammer 5 ist durch eine an der Oberseite der Lochplatte 13 ausgebildete Verteilnut 27 erweitert, so dass die in der Lochplatte 13 ausgebildeten Durchgangsbohrungen 17 aus der Verteilnut 27 heraus mit einer über den Schmelzeeinlass 4 der Verteilerplatte 1 zugeführten Polymerschmelze gespeist werden.

Bei dieser Anordnung ist ein Filterelement 6 auf der Auslassseite der Lochplatte 13 angeordnet. Das Filterelement 6 wird durch eine Stützplatte 25 gestützt. Die Stützplatte 25 ist hierzu in einer Ausnehmung 12 der Düsenplatte 2 angeordnet. Die Düsenplatte 2 ist identisch zu dem Ausführungsbeispiel nach Fig. 1 und 2 ausgeführt und wirkt an der Unterseite mit einer hier nicht dargestellten Auslassplatte zusammen.

Zur Verteilung der Polymerschmelze weist die Lochplatte mehrere Bohrungsgruppen auf, die entsprechend dem Ausführungsbeispiel nach Fig. 7 in zwei hier nicht näher dargestellte Bohrungsreihen angeordnet sind. Die Bohrungsgruppen 18.1 und 18.2 sind spiegelsymmetrisch zu den Bohrungsgruppen 18.3 und 18.4. die Symmetrieebene wird hierbei durch eine Plattenmitte 21 der Lochplatte 13 gebildet. Die Durchgangsbohrungen 17 der Bohrungsgruppen 18.1, 18.2, 18.3 und 18.4 sind dabei derart ausgeführt, dass nur die Durchgangsbohrungen 17 im Bereich einer Düsenmitten, die in diesem Fall mit der Plattenmitte 21 identisch ist, eine Neigung zur kreuzenden Verteilung der Schmelze aufweisen. Im Verhältnis zu der gesamten Länge der Verteilkammer 5 erstreckt sich der mittlere Bereich mit geneigten Durchgangsbohrungen 17 in der Lochplatte 13 auf ca. einer Länge von einem Drittel der Verteilkammer. In den anderen Bereichen der Verteilkammer sind die Durchgangsbohrungen 17 in den Bohrungsgruppen 18.1 bis 18.4 senkrecht ausgeführt. Es hat sich herausgestellt, dass bei der direkten Einspeisung der Schmelze aus der Verteilkammer 4 in die Durchgangsbohrungen 17 der Lochplatte 13 sich insbesondere im mittleren Bereich der Verteilkammer 4 eine Ungleichmäßigkeit der Schmelzeviskosität einstellen. Durch die Umverteilung über die geneigten Durchgangsbohrungen 17 der Bohrungsgruppen 18.1 bis 18.4 wird eine Vergleichmäßigung der Schmelze realisiert.

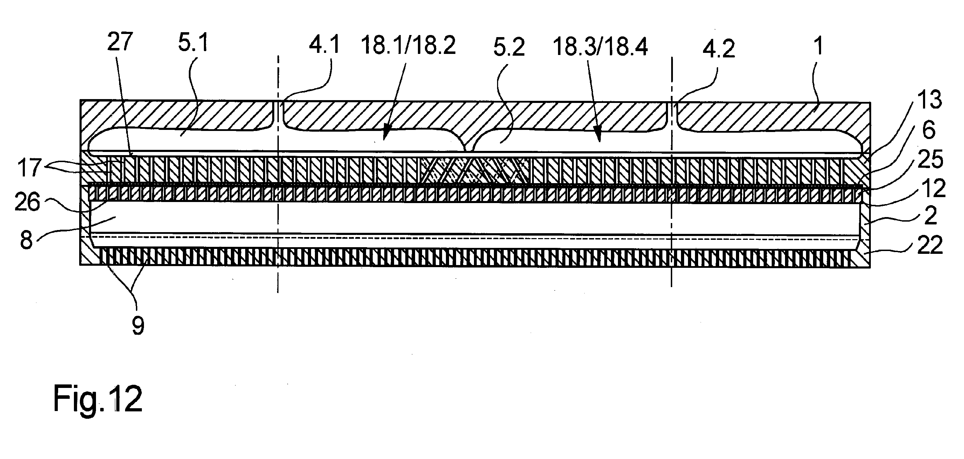

In Fig. 12 ist ein weiteres Ausführungsbeispiel des erfindungsgemäßen Spinndüsenpaketes gezeigt, wobei das Ausführungsbeispiel im Wesentlichen identisch zu dem Ausführungsbeispiel nach Fig. 11 ist. Bei dem in Fig. 12 dargestellten Ausführungsbeispiel, ist das Spinndüsenpaket in einer Längsschnittdarstellung gezeigt, wobei das Ausführungsbeispiel insbesondere zur Herstellung von Faservliesen für große Arbeitsbreiten genutzt wird. Aus diesem Grund weist die Verteilplatte 1 mehrere nebeneinander ausgebildete Verteilkammern 5.1 und 5.2 auf, die jeweils über einen separaten Schmelzeeinlass 4.1 und 4.2 mit einer Polymerschmelze gespeist werden.

Die mit der Verteilplatte 1 kombinierte Lochplatte 13 und Düsenplatte 2 sind identisch zu dem Ausführungsbeispiel nach Fig. 11 ausgeführt. Auch hierbei ist das Filterelement 6 in Flussrichtung der Lochplatte 13 nachgeordnet und wird über eine separate Stützplatte 25 in einer Ausnehmung der Düsenplatte 2 gehalten. Die Düsenplatte 2 ist identisch zu dem Ausführungsbeispiel nach Fig. 1 und 2 ausgeführt, so dass zu der vorgenannten Beschreibung Bezug genommen wird und an dieser Stelle keine weiteren Erläuterungen erfolgen.

Die Düsenplatte 2 wirkt mit eine hier nicht dargestellten Außenplatte 3 zusammen.

Die in der Lochplatte 13 vorgesehenen Durchgangsbohrungen 17 sind ebenfalls in mehreren Bohrungsgruppen 18.1 bis 18.4 ausgebildet, die in zwei nicht dargestellten Bohrungsreihen nebeneinander angeordnet sind. Um den mittleren Bereich des Spinndüsenpaketes, in welchem die Verteilkammern 5.1 und 5.2 aneinander grenzen eine Umverteilung der Schmelze zu erhalten, sind die Durchgangsbohrungen 17 in der Lochplatte 13 in jeder der Bohrungsgruppe 18.1 bis 18.4 mit einer Neigung ausgebildet. Insoweit wird nur an der Trennstelle zwischen den Verteilkammern 5.1 und 5.2 eine Umverteilung der Schmelze vorgenommen. In den anderen Bereichen der Verteilkammern 5.1 und 5.2 sind die Bohrungsgruppen 18.1 bis 18.4 mit senkrechten Durchgangsbohrungen 17 ausgeführt.

Das erfindungsgemäße Spinndüsenpaket ist besonders geeignet, um temperaturempfindliche Polymere wie beispielsweise das Polymer PBT mit hoher Gleichmäßigkeit zu Fasern und Faserlagen zu erzeugen. Durch die Umverteilung der Schmelze beim Übergang von der Verteilerkammer zu dem Zuführkanal wird eine hohe Homogenität der Schmelze erzielt, die Viskositätsunterschiede der Schmelzen aufgrund unterschiedlicher Wärmeaustauschverhalten in der Verteilerkammer werden vorteilhaft kompensiert.

### Bezugszeichenliste

- 1: Verteilerplatte
- 2: Düsenplatte
- 3: Auslassplatte
- 4, 4.1, 4.2: Schmelzeeinlass
- 5, 5.1, 5.2: Verteilerkammer
- 6: Filterelement
- 7.1, 7.2: Luftkanal
- 8: Zuführkanal
- 9: Düsenbohrungen
- 10: Unterseite
- 11: Oberseite
- 12: Ausnehmung
- 13: Lochplatte
- 14.1, 14.2: Luftkanal
- 15.1, 15.2: Luftkammer
- 16.1, 16.2: Luftdüsenkanal
- 17: Durchgangsbohrung
- 18.1, 18.2, 18.3, 18.4: Bohrungsgruppen
- 19.1, 19.2: Bohrungsreihen
- 20.1, 20.2: Verteilerebene
- 21: Plattenmitte
- 22: Steg
- 23: Vertiefung
- 24.1, 24.2: Drucklufteinlass
- 25: Stützplatte
- 26: Lochung
- 27: Verteilnut

## Patentansprüche

1. Spinndüsenpaket zum Erzeugen von Fasern aus einer Polymerschmelze mit einer länglichen Düsenplatte (2), die an einer Oberseite (11) einen Zuführkanal (8) und an einer Unterseite (10) zumindest eine Reihe nebeneinander angeordneter Düsenbohrungen (9) aufweist, wobei die Düsenbohrungen (9) mit dem Zuführkanal (8) verbunden sind, und mit einer an der Oberseite (11) der Düsenplatte (2) angeordneten Verteilerplatte (1), die zumindest eine dem Zuführkanal (8) zugewandte Verteilerkammer (5) und einen mit der Verteilerkammer (5) verbundenden Schmelzeeinlass (4) aufweist, wobei zwischen der Verteilerkammer (5) der Verteilerplatte (1) und dem Zuführkanal (8) der Düsenplatte (2) eine Lochplatte (13) mit einer Vielzahl von Durchgangsbohrungen (17) angeordnet ist,
**dadurch gekennzeichnet, dass**
die Durchgangsbohrungen (17) in der Lochplatte (13) in mehrere Bohrungsgruppen (18.1, 18.2) aufgeteilt sind und dass die Durchgangsbohrungen (17) von zumindest zwei der Bohrungsgruppen (18.1, 18.2) innerhalb der Lochplatte (13) gegenüber Mittelsenkrechten derart unterschiedliche Neigungswinkel (α, β) aufweisen, dass sich die Durchgangsbohrungen (17) der Bohrungsgruppen (18.1, 18.2) zumindest teilweise innerhalb der Lochplatte (13) im Abstand zueinander kreuzen.

2. Spinndüsenpaket nach Anspruch 1,
**dadurch gekennzeichnet, dass**
die geneigten Durchgangsbohrungen (17) innerhalb der Lochplatte (13) durch zwei benachbarten Bohrungsreihen (19.1, 19.2) gebildet sind, die parallel zu der Reihe der Düsenbohrungen (9) verlaufen.

3. Spinndüsenpaket nach Anspruch 1 oder 2,
**dadurch gekennzeichnet, dass**
die geneigten Durchgangsbohrungen (17) innerhalb der Lochplatte (13) in zwei benachbarten Verteilerebenen (20.1, 20.2) angeordneten sind, die sich parallel zu der Reihe der Düsenbohrungen (9) erstrecken.

4. Spinndüsenpaket nach einem der Ansprüche 1 bis 3,
**dadurch gekennzeichnet, dass**
die Lochplatte (13) zwei Bohrungsreihen (19.1, 19.2) mit mehreren Bohrungsgruppen (18.1 - 18.4) aufweisen, wobei die Durchgangsbohrungen (17) der Bohrungsgruppen (18.1 - 18.4) innerhalb einer der Bohrungsreihen (19.1, 19.2) spiegelsymmetrisch zu einer Plattenmitte (21) der Lochplatte (13) ausgebildet sind.

5. Spinndüsenpaket nach einem der Ansprüche 1 bis 4,
**dadurch gekennzeichnet, dass**
die Durchgangsbohrungen (17) einer der Bohrungsgruppen (18.1 - 18.4) innerhalb der Lochplatte (13) jeweils gleich große Neigungswinkel (α, β) aufweisen.

6. Spinndüsenpaket nach einem der Ansprüche 1 bis 4,
**dadurch gekennzeichnet, dass**
die Durchgangsbohrungen (17) einer der Bohrungsgruppen (18.1 - 18.4) innerhalb der Lochplatte (13) jeweils ungleich große Neigungswinkel (α, β) aufweisen.

7. Spinndüsenpaket nach einem der Ansprüche 1 bis 6,
**dadurch gekennzeichnet, dass**
die Neigungswinkel (α, β) der Durchgangsbohrungen in einem Winkelbereich von 0° bis 60° und / oder 0° bis -60° liegen.

8. Spinndüsenpaket nach einem der Ansprüche 1 bis 6,
**dadurch gekennzeichnet, dass**
die Verteilerplatte (1) mehrere nebeneinander ausgebildete Verteilerkammern (5.1, 5.2) aufweist und dass den Verteilerkammern (5.1, 5.2) eine oder mehrere Lochplatten (13) mit mehreren Bohrungsgruppen (18.1 - 18.4) zugeordnet sind.

9. Spinndüsenpaket nach einem der Ansprüche 1 bis 8,
**dadurch gekennzeichnet, dass**
die Lochplatte (13) in einer symmetrisch zum Zuführkanal (8) ausgebildeten Ausnehmung (12) an der Oberseite (11) der Düsenplatte (1) gehalten ist.

10. Spinndüsenpaket nach einem der Ansprüche 1 bis 9,
**dadurch gekennzeichnet, dass**
an der Unterseite (10) der Düsenplatte (1) eine Auslassplatte (3) angeordnet ist und dass zwischen der Düsenplatte (1) und der Auslassplatte (3) zwei gegenüberliegende Luftdüsenkanäle (16.1, 16.2) gebildet sind, die mit ihren Austrittsöffnungen den Düsenbohrungen (9) zugeordnet sind.

## Claims

1. Spinneret bundle for producing fibers from a polymer melt, comprising an elongated nozzle plate (2) that has a feed channel (8) on an upper face (11) and at least one row of nozzle bores (9) that are arranged next to one another on a lower face (10), wherein the nozzle bores (9) are connected with the feed channel (8) and with a distributing plate (1) provided on the upper face (11) of the nozzle plate (2), which distributing plate (1) comprises at least one distributing chamber (5) that is facing the feed channel (8) and a melt inlet (4) that is connected with the distributing chamber (5), wherein a perforated plate (13) with a plurality of through-bores (17) has been arranged between the distributing chamber (5) of the distributing plate (1) and the feed channel (8) of the nozzle plate (2), **characterized in that** the through-bores (17) in the perforated plate (13) are divided in multiple bore groups (18.1, 18.2) and that the through-bores of at least two of the bore groups (18.1, 18.2) have inclination angles (α, β) that are different within the perforated plate (13) with respect to perpendicular bisectors in such a way that the through-bores (17) of the bore groups (18.1, 18.2) at least partly cross one another at a distance from one another within the perforated plate (13).

2. Spinneret bundle according to Claim 1, **characterized in that** the inclined through-bores (17) within the perforated plate (13) are formed by two adjacent rows of holes (19.1, 19.2), which run parallel to the row of nozzle bores (9).

3. Spinneret bundle according to Claim 1 or 2, **characterized in that** the inclined through-bores (17) within the perforated plate (13) are arranged at two adjacent distribution levels (20.1, 20.1), which extend parallel to the rows of nozzle bores (9).

4. Spinneret bundle according to any one of claims 1 to 3, **characterized in that** the perforated plate (13) comprises two rows of holes (19.1, 19.2) with multiple bore groups (18.1 - 18.4), wherein the through-holes (17) of the bore groups (18.1 - 18.4) within one of the rows of holes (19.1, 19.2) are designed in mirror-symmetry to a central region (21) of the perforated plate (13).

5. Spinneret bundle according to any one of claims 1 to 4, **characterized in that** each of the through-bores (17) of one of the bore groups (18.1 - 18.4) within the perforated plate (13) is provided with an equal inclination angle (α β).

6. Spinneret bundle according to any one of claims 1 to 4, **characterized in that** each of the through-bores (17) of one of the bore groups (18.1 - 18.4) within the perforated plate (13) is provided with a different inclination angle (α, β).

7. Spinneret bundle according to any one of claims 1 to 6, **characterized in that** the inclination angle (α, β) of the through-bores are arranged in an angular range of between 0° to 60° and/or 0° to -60°.

8. Spinneret bundle according to any one of claims 1 to 6, **characterized in that** the distributing plate (1) comprises a plurality of adjacent distributing chambers (5.1, 5.2) and that the distributing chambers (5.1, 5.2) are associated with one or multiple perforated plates (13) with multiple bore groups (18.1 - 18.4).

9. Spinneret bundle according to any one of claims 1 to 8, **characterized in that** the perforated plate (13) is held in a recess (12) that is arranged symmetrically with respect to the feed channel (8) on the upper face of the nozzle plate (1).

10. Spinneret bundle according to any one of claims 1 to 9, **characterized in that** a diffuser plate (3) has been arranged on the lower face (10) of the nozzle plate (1) and that two opposite air nozzle channels (16.1, 16.2) have been provided between the nozzle plate (1) and the diffuser plate (3), which air nozzle channels (16.1, 16.2) have discharge outlets associated with the nozzle bores (9).

## Revendications

1. Ensemble de filière pour produire des fibres à partir d'une masse fondue de polymère, comprenant une plaque de filière allongée (2), laquelle comprend, sur un côté supérieur (11), un canal d'alimentation (8) et, sur un côté inférieur (10), au moins une rangée d'alésages de filière juxtaposés (9), les alésages de filière (9) étant reliés au canal d'alimentation (8), et comprenant une plaque de répartition (1) disposée sur le côté supérieur (11) de la plaque de filière (2), laquelle plaque de répartition comprend au moins une chambre de répartition (5) tournée vers le canal d'alimentation (8) et une entrée de masse fondue (4) reliée à la chambre de répartition (5), une plaque perforée (13) comprenant une pluralité d'alésages traversants (17) étant disposée entre la chambre de répartition (5) de la plaque de répartition (1) et le canal d'alimentation (8) de la plaque de filière (2),
**caractérisé en ce que**
les alésages traversants (17) dans la plaque perforée (13) sont distribués en plusieurs groupes d'alésages (18.1, 18.2), et **en ce que** les alésages traversants (17) d'au moins deux des groupes d'alésages (18.1, 18.2) à l'intérieur de la plaque perforée (13) présentent différents angles d'inclinaison (α, β) par rapport aux perpendiculaires centrales, de telle sorte que les alésages traversants (17) des groupes d'alésages (18.1, 18.2) se croisent au moins partiellement à l'intérieur de la plaque perforée (13), à distance les uns des autres.

2. Ensemble de filière selon la revendication 1,
**caractérisé en ce que**
les alésages traversants inclinés (17) à l'intérieur de la plaque perforée (13) sont formés par deux rangées adjacentes d'alésages (19.1, 19.2), lesquelles s'étendent parallèlement à la rangée des alésages de filière (9).

3. Ensemble de filière selon la revendication 1 ou 2,
**caractérisé en ce que**
les alésages traversants inclinés (17) à l'intérieur de la plaque perforée (13) sont disposés dans deux plans de répartition adjacents (20.1, 20.2), lesquels s'étendent parallèlement à la rangée des alésages de filière (9).

4. Ensemble de filière selon l'une quelconque des revendications 1 à 3,
**caractérisé en ce que**
la plaque perforée (13) comprend deux rangées d'alésages (19.1, 19.2) comprenant plusieurs groupes d'alésages (18.1 - 18.4), les alésages traversants (17) des groupes d'alésages (18.1 - 18.4) à l'intérieur de l'une des rangées d'alésages (19.1, 19.2) étant réalisés de manière à présenter une symétrie spéculaire par rapport à un centre de plaque (21) de la plaque perforée (13).

5. Ensemble de filière selon l'une quelconque des revendications 1 à 4,
**caractérisé en ce que**
les alésages traversants (17) de l'un des groupes d'alésages (18.1 - 18.4) à l'intérieur de la plaque perforée (13) présentent respectivement des angles d'inclinaison (α, β) de même grandeur.

6. Ensemble de filière selon l'une quelconque des revendications 1 à 4,
**caractérisé en ce que**
les alésages traversants (17) de l'un des groupes d'alésages (18.1 - 18.4) à l'intérieur de la plaque perforée (13) présentent respectivement des angles d'inclinaison (α, β) de grandeurs différentes.

7. Ensemble de filière selon l'une quelconque des revendications 1 à 6,
**caractérisé en ce que**
les angles d'inclinaison (α, β) des alésages traversants se situent dans une plage angulaire de 0° à 60° et/ou de 0° à -60°.

8. Ensemble de filière selon l'une quelconque des revendications 1 à 6,
**caractérisé en ce que**
la plaque de répartition (1) comprend plusieurs chambres de répartition (5.1, 5.2) réalisées de manière juxtaposée, et **en ce qu'**une ou plusieurs plaques perforées (13) comprenant plusieurs groupes d'alésages (18.1 - 18.4) sont associées aux chambres de répartition (5.1,5.2).

9. Ensemble de filière selon l'une quelconque des revendications 1 à 8,
**caractérisé en ce que**
la plaque perforée (13) est retenue dans un évidement (12), réalisé de manière symétrique par rapport au canal d'alimentation (8), sur le côté supérieur (11) de la plaque de filière (1).

10. Ensemble de filière selon l'une quelconque des revendications 1 à 9,
**caractérisé en ce**
**qu'**une plaque de sortie (3) est disposée sur le côté inférieur (10) de la plaque de filière (1), et en ce que deux canaux de buses d'air (16.1, 16.2) se faisant face sont formés entre la plaque de filière (1) et la plaque de sortie (3), lesquels canaux de buses d'air sont associés par leurs ouvertures de sortie aux alésages de filière (9).
